# EUROPÄISCHE PATENTSCHRIFT

(11) **EP 4 028 194 B1**
(45) Veröffentlichungstag und Bekanntmachung des Hinweises auf die Patenterteilung: **16.10.2024**
(21) Anmeldenummer: 21714902.0
(22) Anmeldetag: 30.03.2021
(51) Int. Cl.: B23H 7/08, C25D 7/06

(54) **DRAHTELEKTRODE ZUM FUNKENEROSIVEN SCHNEIDEN**
WIRE ELECTRODE FOR ELECTRICAL DISCHARGE CUTTING
ÉLECTRODE FIL DESTINÉE À LA COUPE PAR ÉTINCELAGE

(30) Priorität: 31.03.2020 EP 20167319
(43) Veröffentlichungstag der Anmeldung: 20.07.2022
(73) Patentinhaber: Berkenhoff GmbH, 35452 Heuchelheim (DE)
(72) Erfinder: BARTHEL, Bernd, 35239 Steffenberg (DE); FLÜGGE, Stefan, 58675 Hemer (DE); NÖTHE, Tobias, 35745 Herborn (DE); ZUNKE, Ivo, 35390 Gie en (DE)
(74) Vertreter: Uexküll & Stolberg
(86) Internationale Anmeldenummer: PCT/EP2021/058275
(87) Internationale Veröffentlichungsnummer: WO 2021/198245

(56) Entgegenhaltungen:
- JP-A- 2002 126 949
- US-A- 5 945 010
- US-A1- 2008 179 296
- US-A1- 2016 151 848

## Beschreibung

### Gebiet der Erfindung

Die vorliegende Erfindung betrifft eine Drahtelektrode zum funkenerosiven Schneiden und ein Verfahren zu deren Herstellung.

### Stand der Technik

Funkenerosionsverfahren (Electrical Discharge Machining, EDM) werden zum Trennen elektrisch leitender Werkstücke eingesetzt und beruhen auf der Abtragung von Werkstoff mit Hilfe von Funkenentladungen zwischen dem Werkstück und einem Werkzeug. Zu diesem Zweck werden zwischen dem betreffenden Werkstück und dem in einem geringen Abstand dazu angeordneten und als Elektrode fungierenden Werkzeug in einer dielektrischen Flüssigkeit, wie zum Beispiel deionisiertem Wasser oder Öl, durch das Anlegen von Spannungsimpulsen kontrollierte Funkenentladungen herbeigeführt. Auf diese Weise können Werkstücke, die beispielsweise aus Metallen, elektrisch leitfähigen Keramiken bzw. Verbundwerkstoffen usw. bestehen, im Wesentlichen unabhängig von ihrer Härte bearbeitet werden. Die elektrische Energie für die Funkenentladungen wird durch den Impulsgenerator der Erodiermaschine bereitgestellt.

Ein spezielles Funkenerosionsverfahren, bei dem das Werkzeug durch einen gespannten, dünnen Draht mit typischen Durchmessern in einem Bereich von etwa 0,02 bis 0,4 mm gebildet wird, ist das funkenerosive Schneiden oder Drahterodieren. Da der Draht während des Erodierprozesses durch Materialabtragung verschleißt, muss er ständig durch die Schneid- bzw. Bearbeitungszone gezogen werden und kann nur einmal verwendet werden, d.h. der Draht wird kontinuierlich verbraucht. Die gewünschte Schnittkontur wird zunächst durch einen sog. Hauptschnitt mit relativ hoher Entladeenergie durchgeführt. Zur Verbesserung der Konturgenauigkeit und der Oberflächenrauheit des Werkstücks können sich an den Hauptschnitt einer oder mehrere sog. Nachschnitte mit sukzessive verringerter Entladeenergie anschließen. Bei diesen Nachschnitten befindet sich die Drahtelektrode nur noch mit einem Teil ihres Umfangs im Eingriff. Die maschinenseitigen Einstellparameter für den Hauptschnitt und die Nachschnitte, wie Leerlaufspannung, Impulsstrom, Impulsdauer, Pausendauer, Parameter der Spaltweitenregelung, Drahtvorspannkraft, Drahtablaufgeschwindigkeit, Spüldruck etc. sind in sog. Technologien bzw. Erodier- oder Schneidtechnologien zusammengefasst. Für verschiedene zu bearbeitende Materialsorten, Werkstückhöhen, Drahtsorten, Drahtdurchmesser und Qualitätsziele sind auf handelsüblichen Erodiermaschinen entsprechende Erodiertechnologien abrufbar.

In der Praxis finden sowohl beschichtete als auch unbeschichtete Drähte bzw. Drahtelektroden Anwendung, die heute zumeist auf Messing- oder Kupferbasis hergestellt sind. Unbeschichtete Drahtelektroden, die auch als Blankdrähte bezeichnet werden, bestehen aus einem homogenen Material, während beschichtete Drahtelektroden einen ummantelten bzw. beschichteten Kern aufweisen. Beschichtete Drahtelektroden sind im Stand der Technik in aller Regel so konstruiert, dass eine Ummantelung bzw. ein Mantel, die bzw. der aus einer Mantelschicht oder mehreren übereinander angeordneten Mantelschichten aufgebaut sein kann, für den eigentlichen Erosionsprozess verantwortlich ist, während der Kern der Drahtelektrode beispielsweise die für den Drahtdurchlauf und die Drahtvorspannung erforderliche Zugfestigkeit und die notwendige elektrische und thermische Leitfähigkeit verleiht.

Blankdrähte bestehen typischerweise aus Messing mit einem Zinkanteil zwischen 35 und 40 Gew.-%, während die meisten beschichteten Drähte einen Kern aus Kupfer oder Messing und eine oder mehrere Mantelschichten aus Zink oder einer Kupfer-Zink-Legierung aufweisen. Als am eigentlichen Erodierprozess beteiligte Materialien bieten Zink und Messing aufgrund der Anwesenheit von Zink mit seiner geringen Verdampfungstemperatur die Vorteile einer relativ hohen Abtragleistung und Effizienz des Erodierprozesses und der Möglichkeit der Übertragung sehr kleiner Impulsenergien zum Feinschlichten von Werkstückoberflächen, d.h. der Bearbeitung unter Erzeugung möglichst geringer Oberflächenrauigkeiten. Vor diesem Hintergrund werden zum Zweck des Feinschlichtens häufig Drahtelektroden eingesetzt, die eine Mantelschicht aufweist, die überwiegend oder ausschließlich aus Zink besteht.

Es ist bekannt, dass sich gegenüber Blankdrähten und Drähten, die über eine Beschichtung aufweisen, die überwiegend oder ausschließlich aus Zink besteht, die Abtraggeschwindigkeit bzw. Schneidleistung durch Verwendung von Drähten steigern lässt, die mit einer Beschichtung versehen sind, die eine oder mehrere zinkhaltige Legierungen aufweisen. Hierzu zählen Drähte, deren Beschichtung Messing in einer oder mehrerer der Phasen β bzw. β', γ und ε aufweist.

Zur Erzielung hoher Schneidleistungen hat es sich als vorteilhaft herausgestellt, eine Beschichtung aus einer spröden Legierung, wie z.B. Messing in γ-Phase, bei einem Durchmesser größer als dem Enddurchmesser durch Diffusion zu erzeugen und danach durch Kaltumformung an die Endabmessung zu ziehen. Dadurch bricht die sprödharte Schicht auf, so dass Vertiefungen und durchgehende Risse in dieser entstehen und das darunter befindliche Material hervordringt (vgl. US 5,945,010**,** US 6,306,523**).** Die Risse und Vertiefungen erhöhen die Oberfläche des Drahtes. Dadurch wird dieser besser vom umgebenden Dielektrikum gekühlt, und auch das Austragen von Abtragpartikeln aus dem Spalt wird begünstigt. Daneben entstehen an den durch die Risse erzeugten Kanten durch Überhöhung des elektrischen Feldes bevorzugt Entladungen. Dies fördert die Zündwilligkeit der Drahtelektrode und somit die Schneidleistung. Gem. der US 5,945,010, die eine Drahtelektrode gemäß dem Oberbegriff des Anspruchs 1 zeigt, werden gute Erodierergebnisse im Sinne von Schneidleistung und Oberflächenqualität erzielt, wenn die Beschichtung weniger als 100% und mehr als 50% der Drahtoberfläche bedeckt.

Diese und weitere Entwicklungen zur Steigerung der Schneidleistung beruhen auch auf Kombinationen von verschiedenen der genannten Mantelschichten, ggf. mit weiteren Schichten, in einem mehrschichtig aufgebauten Mantel. Dabei sind auch vereinzelt, teilweise zwangsweise bedingt durch während der entsprechenden Herstellungsverfahren stattfindende Diffusionsprozesse, Ummantelungen vorgeschlagen worden, die eine Messing-Mantelschicht mit einem Phasengemisch zum Beispiel aus α- und β-Phase oder aus β- und γ-Phase aufweisen.

In der US 7,723,635 wird eine Drahtelektrode vorgeschlagen, die einen Kern und eine erste Mantelschicht aus einer Messinglegierung mit ca. 37 - 49,5 Gew.-% Zink aufweist, wobei in der Mantelschicht eingebettet, gleichmäßig verteilte sogenannte Körner vorhanden sind, die voneinander beabstandet sind und die eine Messinglegierung mit einem Zinkanteil von ca. 49,5 - 58 Gew.-% Zink enthalten. Mit einer derartigen Drahtelektrode sollen die Erodiereigenschaften aufgrund verbesserter elektrischer Leitfähigkeit und Festigkeit gesteigert werden.

Gemäß der EP-A-2 193 867 weist mindestens eine von mehreren Mantelschichten überwiegend ein feinkörniges Gemisch aus β- und γ-Messing auf. Durch die Einbindung des γ-Messings in eine Matrix aus β-Messing soll das γ-Messing während des Erodiervorgangs nicht zu schnell verschleißen, sondern abtragwirksam in kleinen Dosierungen in den Erodierspalt abgegeben werden.

In der EP-A-1 846 189 wird eine Drahtelektrode vorgeschlagen, die eine erste Schicht aus β-Messing sowie eine aufgerissene Schicht aus γ-Messing enthält, in deren Lücken die Schicht aus β-Messing erscheint.

Die EP-A-2 517 817 beschreibt eine Drahtelektrode mit zwei durch Diffusion entstandenen Legierungsschichten. Das Kerndrahtmaterial erscheint entlang von Rissen in der zweiten Legierungsschicht, so dass eine Mehrzahl von kornartigen Strukturen an der Oberfläche gebildet wird. Körner, welche das Kernmaterial und aufweisen, sind in einer Richtung im Wesentlichen senkrecht zu einer Längsrichtung der Drahtelektrode angeordnet. Hierdurch wird sowohl die Schneidleistung als auch die Oberflächenqualität verbessert.

Es hat sich im Zusammenhang mit Beschichtungen aus spröden Phasen wie der γ-Phase jedoch gezeigt, dass zum einen eine Steigerung der Schichtdicke nicht zwingend zu einer weiteren Leistungssteigerung führt (vgl. EP-A-1 295 664**)** und zum anderen der Umformbarkeit dickerer Schichten im Hinblick auf eine wirtschaftliche Herstellbarkeit Grenzen gesetzt sind (vgl. US 5,945,010**).**

Ein wesentlicher Nachteil der zuvor genannten Drahtelektroden besteht darin, dass diese auf Erodiermaschinen, die herstellerseitig nicht über speziell auf diese Drahtelektroden abgestimmte Erodiertechnologien, sondern lediglich über standardmäßige Technologien für blanke Messingdrähte verfügen, häufig nicht die für das zu bearbeitende Bauteil geforderte Präzision und/oder Oberflächenqualität erreichen. Abhilfe kann hier zwar eine Anpassung bzw. Optimierung der vorhandenen Erodiertechnologien schaffen. Den dazu erforderlichen Zeitaufwand können bzw. wollen Erodierbetriebe zumeist jedoch nicht in Kauf nehmen.

Insbesondere bei einer mehrstufigen Erosionsbearbeitung mit einer oder mehreren Feinschlichtstufen zur Erzielung einer geringeren Oberflächenrauheit ist z.B. bekannt, dass es mit Drahtelektroden gem. der US 5,945,010 zur Ausbildung unerwünschter Riefen mit einem Verlauf parallel zur Drahtablaufgeschwindigkeit kommt (siehe die Vergleichsversuche in der EP-A-1 949 995**).** In der EP-A-1 949 995 wird daher zur Abhilfe eine Drahtelektrode mit einer durch blockartige Strukturen ("Blöcke") gebildeten Mantelschicht vorgeschlagen, wobei die Blöcke über eine sehr gleichmäßige Dicke verfügen, einen Zinkanteil von mehr 50 Gew.% aufweisen, und die Drahtoberfläche zu mehr als 50% bedecken. Zudem folgen Risse, die sich zwischen den Blöcken ergeben, einer bevorzugten Orientierung, die mit der Drahtlängsachse einen Winkel von mehr als 45% einschließt. Diese Merkmale werden erreicht, indem die ungefähre Dicke der Mantelschicht vor dem finalen Ziehvorgang 7 µm oder weniger beträgt und das Verhältnis von Enddurchmesser und Zwischendurchmesser vor dem finalen Ziehvorgang im Bereich von 0,4 bis 0,8 liegt. Das bedingt jedoch, dass die Drahtelektrode entweder bei einem entsprechend geringen Durchmesser verzinkt wird oder, dass nach dem Verzinken bei einem größeren Durchmesser noch ein Zwischenzug durchgeführt werden muss. Beides beeinträchtigt die Wirtschaftlichkeit der Herstellung der Drahtelektrode.

### Aufgabe der Erfindung

Aufgabe der Erfindung ist es, eine Drahtelektrode bereitzustellen, mit der einerseits eine im Vergleich zu blanken Messingdrähten höhere Schneidleistung und damit verbesserte Wirtschaftlichkeit der Drahterodiertechnik erreicht wird, und andererseits im Vergleich zu blanken Messingdrähten und den zuvor genannten beschichteten Drähten eine gleiche oder höhere Präzision und Oberflächengüte am Bauteil erreicht wird.

Ferner ist es Aufgabe der Erfindung, eine Drahtelektrode bereitzustellen, die sich mit Erodiertechnologien für blanken Messingdraht betreiben lässt, insbesondere für solche Erodiertechnologien, die mehrere Schnitte umfassen, so dass eine im Vergleich zu blanken Messingdrähten höhere Schneidleistung erreicht wird, und im Vergleich zu blanken Messingdrähten und den zuvor genannten beschichteten Drähten eine gleiche oder höhere Präzision und Oberflächengüte am Bauteil erreicht wird.

Eine weitere Aufgabe der Erfindung ist es, eine Drahtelektrode mit den zuvor genannten Vorteilen bereitzustellen, die sich mit einem möglichst geringen Fertigungsaufwand erzeugen lässt.

### Zusammenfassung der Erfindung

Zur Lösung dieser Aufgabe dient eine Drahtelektrode mit den Merkmalen von Patentanspruch 1. Vorteilhafte Ausführungsformen der Drahtelektrode sind Gegenstand der jeweiligen Unteransprüche.

### Kurze Beschreibung der Figuren

**Figur 1** zeigt schematisch und nicht maßstabsgetreu einen Querschnitt (senkrecht zur Längsachse) einer ersten Ausführungsform der erfindungsgemäßen Drahtelektrode.
**Figur 2** zeigt eine lichtmikroskopische Aufnahme eines Ausschnitts des äußeren Umfangs einer erfindungsgemäßen Drahtelektrode in einem Querschnitt senkrecht zur Längsachse des Drahtes.
**Figur 3** zeigt in einem Querschnitt senkrecht zur Längsachse einen Ausschnitt des äußeren Umfangs der erfindungsgemäßen Drahtelektrode gemäß Figur 1.
**Figur 4** zeigt eine lichtmikroskopische Aufnahme der Oberfläche einer erfindungsgemäßen Drahtelektrode.
**Figur 5** zeigt die lichtmikroskopische Aufnahme aus Figur 3 mit einem rechteckigen Bezugsrahmen zur Bestimmung des Bedeckungsgrads mit blockartigen Partikeln bzw. daraus gebildeten Clustern.
**Figur 6** zeigt die lichtmikroskopische Aufnahme aus Figur 3 mit einer Kennzeichnung der Drahtlängsachse und der zeilenförmigen Cluster von blockartigen Partikeln.
**Figur 7** zeigt die lichtmikroskopische Aufnahme der Oberfläche einer ersten nicht erfindungsgemäßen Drahtelektrode.
**Figur 8** zeigt die lichtmikroskopische Aufnahme der Oberfläche einer zweiten nicht erfindungsgemäßen Drahtelektrode.

### Ausführliche Beschreibung der Erfindung

Nach der vorliegenden Erfindung ist vorgesehen, dass eine Drahtelektrode zum funkenerosiven Schneiden einen Kern besitzt, der ein Metall oder eine Metalllegierung aufweist. Dabei ist es bevorzugt, dass der Kern zu mehr als 50 Gew.-% und mehr bevorzugt vollständig oder im Wesentlichen vollständig aus einem oder mehreren Metallen und/oder einer oder mehreren Metalllegierungen besteht. Insbesondere kann der Kern demnach insgesamt aus einem Metall oder aus einer Metalllegierung ausgebildet sein. Der Kern kann homogen ausgebildet sein oder, zum Beispiel in Form mehrerer übereinander angeordneter Metall- bzw. Metalllegierungs-Einzelschichten unterschiedlicher Zusammensetzung, in radialer Richtung variierende Eigenschaften aufweisen. Dabei bedeutet "im Wesentlichen" wie hierin verwendet, dass der erfindungsgemäße Draht oder eine Schicht davon bzw. sein Kern aus der jeweils offenbarten Zusammensetzung besteht und/oder die offenbarten Eigenschaften hat, wobei Herstellungs- und Messtoleranzen zu berücksichtigen sind, z.B. die Anwesenheit unvermeidbarer Verunreinigungen, die Fachleuten geläufig sind.

Das Metall ist insbesondere Kupfer und die Metalllegierung ist insbesondere eine Kupfer-Zink-Legierung mit einem Zinkanteil von 20-42 Gew.%.

Den Kern umgebend ist, beispielsweise in Form einer Beschichtung, eine Ummantelung (im Folgenden auch kurz "Mantelschicht") vorgesehen. Die Mantelschicht verschleißt während eines Drahterodiervorgangs und ist dazu vorgesehen, die Erodiereigenschaften zu beeinflussen.

Die Mantelschicht der erfindungsgemäßen Drahtelektrode umfasst Bereiche, die ein partikelförmiges Erscheinungsbild (Morphologie) aufweisen, die insbesondere durch eine unregelmäßige Kontur gekennzeichnet sind, welche teilweise scharfe Ecken mit einem Eckenradius von weniger als 2 µm und Linien mit einer Geradheit enthalten, die weniger als 2 µm von einer idealen Geraden abweichen. Diese Bereiche werden daher als Bereiche bezeichnet, deren Morphologie blockartigen bzw. blockförmigen Partikeln entspricht. Die diese Bereiche enthaltende Schicht wird im Folgenden auch als "Mantelschicht mit blockartiger Morphologie" bezeichnet und die Bereiche, deren Morphologie blockartigen bzw. blockförmigen Partikeln entspricht, werden auch kurz als "blockartige Partikel" (bzw. "blockförmige Partikel") bezeichnet. Zwischen den blockartigen Partikeln kann das Kernmaterial hervordringen. Die blockartigen Partikel sind zudem durch Risse wenigstens über einen Teil ihres Umfangs voneinander und/oder von dem Kernmaterial räumlich separiert. Die blockartigen Partikel selbst können Risse aufweisen.

Die Risse haben im Allgemeinen eine Breite bis zu etwa 2 µm, überwiegend etwa 1 µm, wie mittels Rasterelektronenmikroskopie unter üblichen Bedingungen bestimmbar, z.B. durch Analyse eines auf Basis von Rückstreuelektronen (20 kV) gemessenen Bildes. Falls sich entlang des Verlaufs eines Risses über eine kurze Distanz (z.B. 1 bis 2 µm) eine größere Rissbreite zeigt, wird diese Struktur ebenfalls als Riss im Sinne der vorliegenden Erfindung angesehen. Im Vergleich dazu werden breitere Abstände zwischen den blockartigen Partikeln (die sich üblicherweise von der äußeren Oberfläche des Drahtes radial nach innen ausbilden) als Vertiefungen oder Spalte bezeichnet.

In einem Drahtquerschnitt, senkrecht oder parallel zur Längsachse des Drahtes (hierin auch als "Drahtlängsachse" oder nur kurz als "Drahtachse" bezeichnet) betrachtet, weist der überwiegende, d.h. der mehr als 50% betragende Teil der Fläche der blockartigen Partikel eine Kupfer-Zink-Legierung mit einer Zinkkonzentration von 58,5 - 67 Gew.-% auf. Gemäß dem Phasendiagramm für das System Cu-Zn liegt die Legierung in diesem Teil der Fläche als γ-Phase vor. An der Grenze zu benachbartem Material des Drahts kann sich ein "Saum" aus β-und /oder β'-Phase bilden (wenn als Kernmaterial Kupfer bzw. α-Messing verwendet wird. Dieser Saum ist in der Regel lichtmikroskopisch erkennbar (bzw. mit anderen Fachleuten bekannten Methoden bestimmbar wie REM/EDX wie nachstehend näher erläutert) und wird den blockartigen Partikeln nicht zugerechnet.

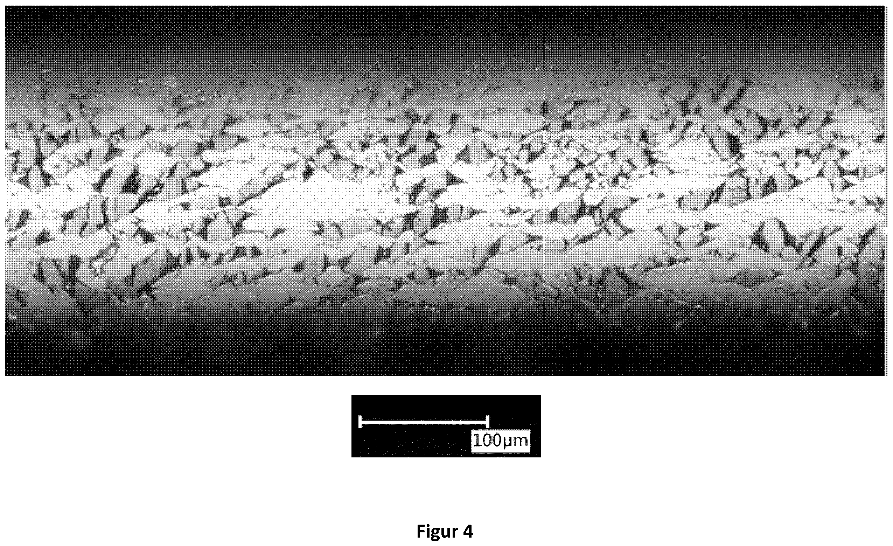

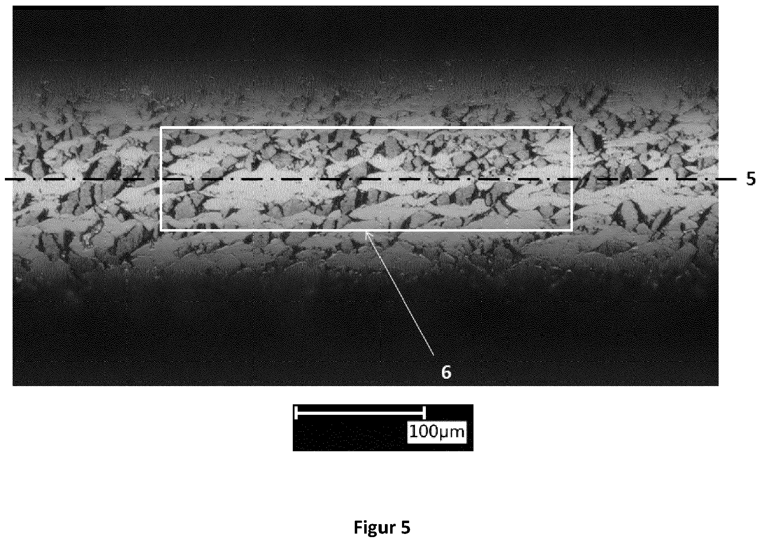

Die Oberfläche der Drahtelektrode wird durch die blockartigen Partikel, durch das Kernmaterial sowie ggf. durch den "Saum" aus β-und /oder β'-Phase gebildet. In einer Ansicht senkrecht auf die Drahtoberfläche, wie sie in den Figuren 4 bis 6 gezeigt ist (senkrecht bezogen auf den radial gesehen am nächsten zum Beobachter (Mikroskop) liegenden Punkt des Drahtumfangs), beträgt der Anteil der durch die blockartigen Partikel gebildeten Oberfläche, d.h. der Bedeckungsgrad, mehr als 20% und weniger als 50% der gesamten Oberfläche der Drahtelektrode. Die Bestimmung dieser Werte kann wie in Bezug auf Figur 5 beschrieben und wie in der Figur selbst dargestellt mittels einer geeigneten Bezugsfläche erfolgen. Diese Bezugsfläche ist in Figur 5 mittels des hellen Bezugsrahmens 6 festgelegt, der eine Größe von etwa 400 µm x 50 µm hat und symmetrisch bezogen auf die Drahtlängsachse angeordnet ist.

In der obigen Ansicht senkrecht auf die Drahtoberfläche ergeben diejenigen blockartigen Partikel, deren Fläche im Bereich von 25 - 250 µm² liegt, in Summe einen Anteil von mehr als 50% der Fläche aller blockartigen Partikel.

In der obigen Ansicht senkrecht auf die Drahtoberfläche sind die blockartigen Partikel zu einem signifikanten Anteil und insbesondere überwiegend in zeilenförmigen Clustern von vier oder mehr Partikeln angeordnet. In diesen Clustern beträgt der Abstand zwischen den Partikeln weniger als 15 µm. Nebeneinander angeordnete Partikel, die dieses Abstandskriterium erfüllen, werden auch als benachbarte Partikel bezeichnet.

Mit zeilenförmig ist gemeint, dass die Partikel als gleichartige Strukturmerkmale nebeneinander in einer "Reihe" angeordnet sind, wobei die Anordnung eine gewisse Unregelmäßigkeit aufweisen kann (hinsichtlich Größe und räumlicher Anordnung der Partikel). Charakteristisch ist jedoch, dass die zeilenförmigen Cluster eine Vorzugsrichtung aufweisen, nämlich durch die Anordnung in einer Reihe (= Zeile), die eine Längsrichtung definiert, und dass sich in Querrichtung dazu entlang der Zeile keine bzw. nur wenige direkt benachbarte Partikel finden, d.h., Partikel, die einen Abstand von weniger als 15 µm aufweisen, wie oben definiert.

Insbesondere finden sich nur wenige Anordnungen von blockartigen Partikeln, die in Form eines ungeordneten "Haufens" nebeneinander liegen, oder streifenartige Anordnungen, die aus mehreren zeilenförmigen Clustern gebildet werden, die über einen wesentlichen Teil ihrer Erstreckung in Längsrichtung direkt nebeneinander angeordnet sind, d.h., so nahe, dass die Partikel in (senkrechter) Querrichtung einen Abstand von weniger als 15 µm aufweisen.

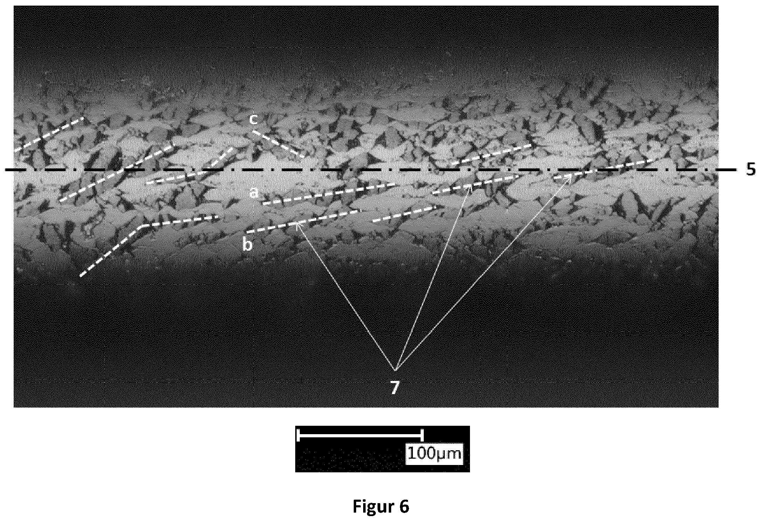

Die Cluster weisen dadurch ein "vereinzeltes" Erscheinungsbild auf, d.h., die Cluster haben nur wenige "Berührungspunkte" mit anderen Clustern, so wie es beispielsweise bei den in Figur 6 gezeigten Clustern (a) und (b) der Fall ist.

Dieses charakteristische morphologische Erscheinungsbild der Cluster lässt sich wie folgt quantifizieren.

Aus blockartigen Partikeln, die wie vorstehend offenbart eine Fläche im Bereich von 25 - 250 µm² aufweisen, wird eine Anordnung ausgewählt, die so viele Partikel dieser Größe enthält, dass sie sich mit einer geraden Linie (Längsachse) verbinden lassen, wobei die Längsachse alle Partikel des Clusters schneiden oder berühren muss, die das vorstehende Größenkriterium erfüllen, und benachbarte Partikel (dieser Größe) einen Abstand in dieser so festgelegten Längsrichtung von weniger als 15 µm aufweisen, oder durch sehr kleine Partikel getrennt sein können, ohne dass das Abstandkriterium von weniger als 15 µm verletzt wird.

Als Anfangs- und Endpunkte der Längsachse werden dabei die am weitesten voneinander entfernt liegenden Enden der am weitesten voneinander liegenden Partikel des nach den obigen Kriterien bestimmten Clusters gewählt.

Der überwiegende Teil, d.h., mehr als 50%, der zeilenförmigen Cluster bilden mit der Längsachse der Drahtelektrode einen Winkel von weniger als 45°, unabhängig von der Blickrichtung entlang der Längsachse der Drahtelektrode, siehe bespielsweise die Cluster (a) und (c) in Figur 6..

Wie vorstehend offenbart treten die Cluster vereinzelt auf, d.h., es liegen in der Regel nicht mehrere zeilenförmige Cluster unmittelbar nebeneinander (d.h., mit einem Abstand in Querrichtung, also senkrecht zur vorstehend definierten Längsrichtung der Cluster, der kleiner als 15 µm ist). Dies ist ebenfalls beispielhaft an der Anordnung der Cluster (a) und (b) in Figur 6 zu erkennen.

In einem Drahtquerschnitt senkrecht oder parallel zur Drahtlängsachse betrachtet weisen mehr als zwei Drittel der blockartigen Partikel eine Dicke gemessen in radialer Richtung von mehr als 0,8% und weniger als 2% des Gesamtdurchmessers der Drahtelektrode auf.

Die im Kern und der Beschichtung enthaltenen Metalle können nicht zu vermeidende Verunreinigungen aufweisen.

Gemäß dem Stand der Technik wäre zu erwarten gewesen, dass eine Drahtelektrode mit einer aufgebrochenen Schicht, die blockartige Partikel aufweist, die einen Zinkgehalt von mehr als 50 Gew.% aufweisen, die aber einen Bedeckungsgrad an solchen Partikeln von weniger als 50% aufweist, und nicht über eine bevorzugte Orientierung der Risse im Wesentlichen senkrecht zur Drahtlängsachse verfügt, weder besonders vorteilhaft für die Schneidleistung noch besonders vorteilhaft für die Oberflächenqualität des Bauteils ist.

Es hat sich jedoch herausgestellt, dass sich mit der erfindungsgemäßen Drahtelektrode, insbesondere bei Verwendung von Erodiertechnologien für blanke Messingdrähte, sehr gute Resultate bezüglich Schneidleistung und Oberflächenqualität erzielen lassen. Ohne an eine spezielle Theorie gebunden zu sein, wird angenommen, dass die folgenden Merkmale bzw. deren Kombination zu einem sehr gleichmäßigen Vorschub in den einzelnen Schnitten der funkenerosiven Bearbeitung beitragen:
- das Vorliegen eines Bedeckungsgrads von weniger als 50% und mehr als 20%,
- die Tatsache, dass diejenigen blockartigen Partikel, deren Fläche im Bereich von 25 - 250 µm² liegt, in Summe einen Anteil von mehr als 50% der Fläche aller blockartigen Partikel ergeben, und
- ferner die Anordnung der blockartigen Partikel in zeilenförmigen Clustern von mindestens 4 Partikeln, in signifikanter Menge bzw. überwiegend,.

Zudem ergibt sich gegenüber blanken Messingdrähten sowohl im Hauptschnitt als auch in der gesamten Bearbeitungsfolge eine signifikante Reduzierung der Bearbeitungszeit.

Ferner lassen sich aufgrund der gezielt eingestellten Dicke der blockartigen Partikel von mehr als 0,8% und weniger als 2% des Gesamtdurchmessers der Drahtelektrode bei wenigstens zwei Drittel der blockartigen Partikel in Kombination mit den zuvor genannten Merkmalen sehr gute Oberflächenqualitäten mit einer sehr geringen Ausprägung von Riefen mit einem Verlauf parallel zur Drahtablaufgeschwindigkeit erzielen.

### Herstellung

Die Herstellung der erfindungsgemäßen Drahtelektrode erfolgt ausgehend von einem Vormaterial, das zu mehr als 50 Gew.-% und mehr bevorzugt vollständig oder im Wesentlichen vollständig aus einem oder mehreren Metallen und/oder einer oder mehreren Metalllegierungen besteht. So kann zum Beispiel von einem Vormaterial in Form eines homogenen Drahtes aus Cu, CuZn₃₇ oder CuZn₄₀ (Messing mit 37 bzw. 40 Gew.-% Zink) mit einem Durchmesser von z.B. 1,20 mm ausgegangen werden. Ausgehend von diesem Vormaterial umfasst die Herstellung der erfindungsgemäßen Drahtelektrode idealerweise nur die drei Prozessschritte Beschichten mit Zink, Diffusionsglühen und Ziehen mit abschließender, integrierter Spannungsarmglühung. Der Durchmesser des Vormaterials vor der Diffusionsglühung ist so gewählt, dass beim Ziehen an den Enddurchmesser eine Reduzierung der Querschnittsfläche um den Faktor 20 - 25 erreicht wird. In einem ersten Schritt wird das Vormaterial beispielsweise galvanisch mit Zink beschichtet. Die Dicke der Zinkschicht, die bei dem Durchmesser vor der Diffusionsglühung vorliegen soll, richtet sich nach dem Zinkgehalt des gewählten Kernmaterials. Wird z.B. ein homogener Kern gewählt, der aus der Legierung CuZn₃₇ besteht, so liegt die Dicke der Zinkschicht bevorzugt in einem Bereich vom 0,8 bis 1,6% des gewünschten Enddurchmessers. Wird z.B. ein homogener Kern gewählt, der aus der Legierung CuZn₄₀ besteht, so liegt die Dicke der Zinkschicht bevorzugt in einem Bereich vom 0,6 bis 1,4% des gewünschten Enddurchmessers.

Der mit Zink beschichtete Draht wird dann einer Diffusionsglühung unterzogen, bei der eine Mantelschicht erzeugt wird, die überwiegend eine Kupfer-Zink-Legierung mit einer Zinkkonzentration von 58,5 - 67 Gew.-% aufweist. Gemäß dem Phasendiagramm für das System CuZn liegt diese Legierung als γ-Phase vor.

Die Diffusionsglühung kann sowohl stationär, z.B. in einem Haubenofen, als auch in einem Durchlaufverfahren, z.B. durch Widerstandserwärmung, durchgeführt werden. Die Diffusionsglühung kann z.B. in einem Haubenofen unter Umgebungsatmosphäre oder Schutzgas bevorzugt in einem Bereich von 180 - 230 °C für 4 - 12 h durchgeführt werden, wobei die mittlere Aufheizrate bevorzugt mindestens 80°C/h und die mittlere Abkühlrate bevorzugt mindestens 60°C/h beträgt. Sie kann alternativ z.B. durch Widerstandserwärmung im Durchlauf unter Umgebungsatmosphäre oder Schutzgas erfolgen, wobei die mittlere Aufheizrate bevorzugt mindestens 10 °C/s beträgt, die max. Drahttemperatur bevorzugt zwischen 600 und 800 °C liegt, die Glühzeit bevorzugt im Bereich von 10 - 200 s liegt und die mittlere Abkühlrate bevorzugt mindestens 10 °C/s beträgt. Die obigen Glühzeiten beziehen sich dabei auf den Zeitraum vom Verlassen der Raumtemperatur bis zum Wiedererreichen der Raumtemperatur.

Im letzten Schritt wird der Draht bevorzugt durch Kaltumformung auf den Enddurchmesser verjüngt und spannungsarmgeglüht. Der Enddurchmesser liegt im Bereich von 0,02 - 0,40 mm. Hierbei reißt die sprödharte Schicht aus Messing in γ-Phase auf, so dass blockartige Partikel entstehen. Die blockartigen Partikel sind räumlich voneinander separiert, so dass zwischen den blockartigen Partikeln das Kernmaterial erscheinen kann. Die blockartigen Partikel selbst können Risse aufweisen.

Durch die wie zuvor beschrieben gezielt gewählte Dicke der Zinkschicht vor der Diffusionsglühung und der gezielt gewählten Querschnittsreduzierung beim Ziehen an den Enddurchmesser werden blockartige Partikel erzeugt, die in einer Ansicht senkrecht auf die Drahtoberfläche jeweils eine Fläche im Bereich von 25 - 250 µm² aufweisen, und die in Summe einen Anteil von mehr als 50% der Fläche aller blockartigen Partikel ergeben, und die ferner in einer Ansicht senkrecht auf die Drahtoberfläche in signifikanter Menge und insbesondere überwiegend in zeilenförmigen Clustern von mindestens vier Partikeln angeordnet sind. In diesen Clustern beträgt der Abstand zwischen den Partikeln weniger als 15 µm. Der überwiegende Teil, d.h. mehr als 50% der zeilenförmigen Cluster bilden mit der Längsachse der Drahtelektrode einen Winkel von weniger als 45°. Der Bedeckungsgrad der blockartigen Partikel beträgt weniger als 50% und mehr als 20 % der gesamten Oberfläche der Drahtelektrode. Ferner wird auf die vorstehende Offenbarung zu den weiteren Details der Cluster verwiesen.

Die Ausbildung der zeilenförmigen Cluster wird zudem durch eine Querschnittsreduzierung je Ziehstufe begünstigt, die zumindest bei den letzten 12 Ziehstufen in einem Bereich von um 8 - 12% liegt.

Liegt die Dicke bei mehr als zwei Drittel der blockartigen Partikel beim Enddurchmesser unterhalb von 0,8% des Enddurchmessers der Drahtelektrode und machen die blockartigen Partikel, die jeweils eine Fläche im Bereich von 25 - 250 µm² aufweisen, in Summe weniger als 50% der Fläche aller blockartigen Partikel auf, so wird mit einer derartigen Ausführungsform gegenüber blankem Messingdraht keine wesentliche Steigerung der Schneidleistung erzielt.

Ist dagegen die Dicke der Beschichtung nach der Diffusionsglühung zu groß, so entstehen nach dem Ziehen an den Enddurchmesser vermehrt blockartige Partikel mit einer Dicke von mehr als 2% des Enddurchmessers und einer Fläche in einer Ansicht senkrecht auf die Drahtoberfläche betrachtet von mehr als 250 µm². Zudem variiert die Dicke der blockartigen Partikel stärker, da die sprödharte Schicht aus Messing in γ-Phase infolge der Kaltumformung stärker in radialer Richtung fragmentiert wird. Mit einer derartigen Ausführungsform wird gegenüber blankem Messingdraht zwar im Hauptschnitt eine wesentliche Steigerung der Schneidleistung erzielt. In den Nachschnitten führt eine derartige Ausführungsform allerdings vermehrt zu Kurzschlüssen und Fehlentladungen. Dies hat nicht nur eine Minderung der Schneidleistung zufolge, sondern beeinträchtigt auch die Oberflächengüte des Bauteils.

Alternativ kann sich an die Beschichtung zunächst ein Zwischenzug anschließen, bevor der Draht der Diffusionsglühung unterzogen wird. Dies kann z.B. eine wirtschaftliche Alternative sein, um erfindungsgemäße Drahtelektroden im Durchmesserbereich von 0,02 - 0,15 mm herzustellen.

Insgesamt lässt sich die erfindungsgemäße Drahtelektrode mit einem geringen Fertigungsaufwand erzeugen. Wird insbesondere für das Kernmaterial eine Kupfer-Zink-Legierung mit 37 - 40 Gew.% Zink gewählt, so beträgt die erforderliche Dicke der Zinkschicht nur 0,6 - 1,6% des Enddurchmessers. Bei einem Enddurchmesser von z.B. 0,25 mm beträgt die erforderliche Dicke der Zinkschicht 1,5 - 4 µm. Dies erlaubt eine relativ hohe Durchlaufgeschwindigkeit bei der Verzinkung. Darüber hinaus gestattet der zuvor genannte Bereich für die erforderliche Zinkschichtdicke relativ kurze Behandlungszeiten bei der Diffusionsglühung. Schließlich mindert der Bedeckungsgrad von mehr als 20% und weniger als 50% gegenüber Drahtelektroden gemäß dem Stand der Technik den Verschleiß an Ziehwerkzeugen.

### Bevorzugte Ausführungsformen

In einem Drahtquerschnitt, senkrecht oder parallel zur Längsachse des Drahtes (hierin auch als "Drahtlängsachse" oder nur kurz als "Drahtachse" bezeichnet) betrachtet, weist bevorzugt der mehr als 75% betragende Teil und mehr bevorzugt der mehr als 90% betragende Teil der Fläche der blockartigen Partikel eine Kupfer-Zink-Legierung mit einer Zinkkonzentration von 58,5 - 67 Gew.-% auf. Noch mehr bevorzugt bestehen die blockartigen Partikel im Wesentlichen vollständig aus einer Kupfer-Zink-Legierung mit einer Zinkkonzentration von 58,5 - 67 Gew.-%. In Bezug auf die Ausbildung eines "Saums" aus einer Kupfer-Zink-Legierung mit niedrigerer Zinkkonzentration an der Grenze zu benachbartem Drahtmaterial wird auf die vorstehende Offenbarung verwiesen.

In einer Ansicht senkrecht auf die Drahtoberfläche, wie zuvor definiert, beträgt der Anteil der durch die blockartigen Partikel gebildeten Oberfläche, d.h. der Bedeckungsgrad bevorzugt mehr als 30% und weniger als 45% der gesamten Oberfläche der Drahtelektrode.

Bevorzugt ergeben in der Ansicht senkrecht auf die Drahtoberfläche diejenigen blockartigen Partikel, deren Fläche im Bereich von 25 - 200 µm² liegt, in Summe einen Anteil von mehr als 50% der Fläche aller blockartigen Partikel.

Mehr bevorzugt ergeben in der Ansicht senkrecht auf die Drahtoberfläche diejenigen blockartigen Partikel, deren Fläche im Bereich von 50 - 200 µm² liegt, in Summe einen Anteil von mehr als 50% der Fläche aller blockartigen Partikel.

Dabei sind die blockartigen Partikel in signifikanter Menge und insbesondere überwiegend in zeilenförmigen Clustern von bevorzugt fünf oder mehr Partikeln angeordnet. In den zeilenförmigen Clustern beträgt der Abstand zwischen den blockförmigen Partikeln bevorzugt weniger als 10 µm.

Wie vorstehend offenbart treten die Cluster zwar in signifikanter Menge und insbesondere überwiegend auf, aber bleiben "vereinzelt", d.h., es liegen in der Regel nicht mehrere zeilenförmige Cluster unmittelbar nebeneinander (d.h., mit einem Abstand in Querrichtung, also senkrecht zur vorstehend definierten Längsrichtung der Cluster, der weniger als 15 µm, bevorzugt weniger als 10 µm beträgt). Dies ist beispielhaft an der Anordnung der Cluster (a) und (b) in Figur 6 gezeigt. Bevorzugt weist ein zeilenförmiger Cluster über weniger als 50% seiner Länge, wie vorstehend definiert, Partikel eines benachbarten Clusters auf.

Der überwiegende Teil, d.h. mehr als 50% der zeilenförmigen Cluster bilden mit der Längsachse der Drahtelektrode bevorzugt einen Winkel von weniger als 40° und mehr bevorzugt von weniger als 35°. Bevorzugt bilden mehr als 75% der zeilenförmigen Cluster mit der Längsachse der Drahtelektrode einen Winkel von weniger als 45°.

In einem Drahtquerschnitt senkrecht oder parallel zur Drahtlängsachse betrachtet weisen bevorzugt mehr als 75% und mehr bevorzugt mehr als 90% der blockartigen Partikel eine Dicke gemessen in radialer Richtung von mehr als 0,8% und weniger als 2% des Gesamtdurchmessers der Drahtelektrode auf.

Die erfindungsgemäße Drahtelektrode weist einen Drahtkern auf, der bevorzugt aus der Legierung CuZn₃₇ oder CuZn₄₀ besteht.

Der Aufbau und die Zusammensetzung der erfindungsgemäßen Drahtelektrode lassen sich z.B. anhand einer rasterelektronenmikroskopischen Untersuchung (REM) mit energiedispersiver Röntgenspektroskopie (EDX) bestimmen. Dazu wird die Oberfläche sowie ein Querschliff der Drahtelektrode untersucht. Die Anfertigung eines Drahtquerschliffs kann z.B. durch das sog. lonenböschungsschnittverfahren erfolgen, bei dem der Draht durch eine Blende abgedeckt und mit Ar⁺-Ionen bestahlt wird, wobei über die Blende überstehende Teile des Drahtes durch die Ionen abgetragen werden. Durch dieses Verfahren können Proben frei von mechanischen Deformationen präpariert werden. Die Struktur der Mantelschicht der erfindungsgemäßen Drahtelektrode bleibt durch eine solche Präparation also erhalten. Durch die REM-Bilder lässt sich so die Struktur der Mantelschicht der erfindungsgemäßen Drahtelektrode darstellen. Anhand von punkt-, linien- und flächenförmigen EDX-Analysen lässt sich die Zusammensetzung der erfindungsgemäßen Drahtelektrode bestimmen.

Die Erfindung wird im Folgenden unter Bezugnahme auf die Zeichnungen näher erläutert.

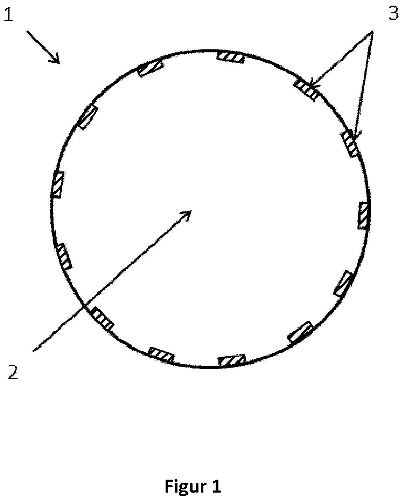

Die in **Figur 1** im Querschnitt gezeigte Drahtelektrode 1 weist einen Drahtkern 2 auf, der von einem Mantel umgeben ist. In der dargestellten beispielhaften Ausführungsform ist der Kern 2 homogen vollständig oder im Wesentlichen vollständig aus Kupfer oder einer Kupfer-Zink-Legierung mit einem Zinkgehalt von bevorzugt 20 bis 40 Gew.% ausgebildet. Die Mantelschicht wird gebildet von blockartigen Partikeln 3, die räumlich voneinander bzw. von dem Material 2 des Kerns separiert sind (z.B. durch Risse (nicht gezeigt)).

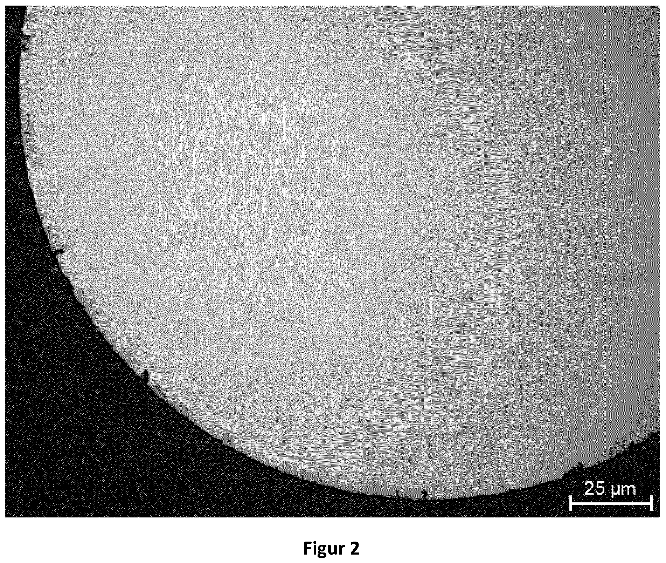

**Figur 2** zeigt in einem Querschnitt senkrecht zur Längsachse eine lichtmikroskopische Aufnahme eines Ausschnitts des äußeren Umfangs der erfindungsgemäßen Drahtelektrode gemäß Figur 1 mit dem Drahtkern und den blockförmigen Partikeln. Zu erkennen ist die genauere Gestalt der blockartigen bzw. blockförmigen Partikel (dunkelgraue Bereiche) und dass diese durch Risse (schwarze Bereiche) über einen Teil ihres Umfangs oder über ihren gesamten Umfang (in diesem Querschnitt betrachtet) voneinander bzw. von dem angrenzenden Material des Kerns (hellgraue Bereiche) separiert sind.

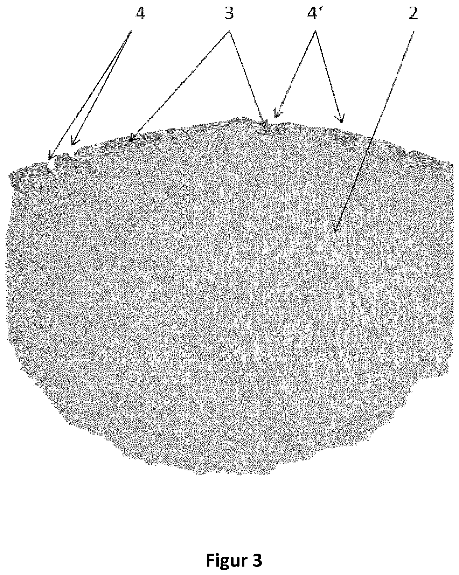

**Figur 3** zeigt in einem Querschnitt senkrecht zur Längsachse einen Ausschnitt des äußeren Umfangs der erfindungsgemäßen Drahtelektrode gemäß Figur 1 mit dem Drahtkern 2 und den blockförmigen Partikeln 3. Zu erkennen ist, dass die blockförmigen Partikel durch Risse und Vertiefungen bzw. Spalten 4 über einen Teil ihres Umfangs (in diesem Querschnitt betrachtet) voneinander bzw. von dem angrenzenden Material des Kerns (hellgraue Bereiche) separiert sind. Ferner zu erkennen sind Risse 4`, die die blockartigen Partikel selbst aufweisen.

**Figur 4** zeigt eine lichtmikroskopische Aufnahme der Oberfläche einer erfindungsgemäßen Drahtelektrode bei 500-facher Vergrößerung. Zu erkennen sind die blockartigen Partikel (dunkelgraue Bereiche) der Mantelschicht sowie Risse und Vertiefungen bzw. Spalten (schwarze Bereiche).

**Figur 5** zeigt die lichtmikroskopische Aufnahme der Oberfläche einer erfindungsgemäßen Drahtelektrode gemäß Figur 4. Zur Bestimmung des Bedeckungsgrads ist hier symmetrisch zur Mittelachse 5 der Drahtelektrode ein rechteckiger Bezugsrahmen 6 mit den Abmessungen 400 x 50 µm eingezeichnet. Der Bedeckungsgrad lässt sich z.B. mittels eines Bildverarbeitungsprogramms bestimmen, indem die durch die blockartigen Partikel gebildete Oberfläche aufgrund ihrer spezifischen Farbgebung innerhalb des Bezugsrahmens berechnet wird und ins Verhältnis zur Fläche des Bezugsrahmens gesetzt wird. Ebenso lässt sich z.B. mittels eines Bildverarbeitungsprogramms die Fläche der einzelnen blockartigen Partikel innerhalb des Bezugsrahmens berechnen.

**Figur 6** zeigt ebenfalls die lichtmikroskopische Aufnahme der Oberfläche einer erfindungsgemäßen Drahtelektrode gemäß Figur 4. Anhand der zusätzlich eingezeichneten gestrichelten Linien sind die zeilenförmigen Cluster 7 von vier oder mehr blockartigen Partikeln gekennzeichnet. Anhand der ebenfalls dargestellten Mittelachse 5 der Drahtelektrode wird deutlich, dass die zeilenförmigen Cluster mit der Längsachse der Drahtelektrode einen Winkel von weniger als 45° einschließen.

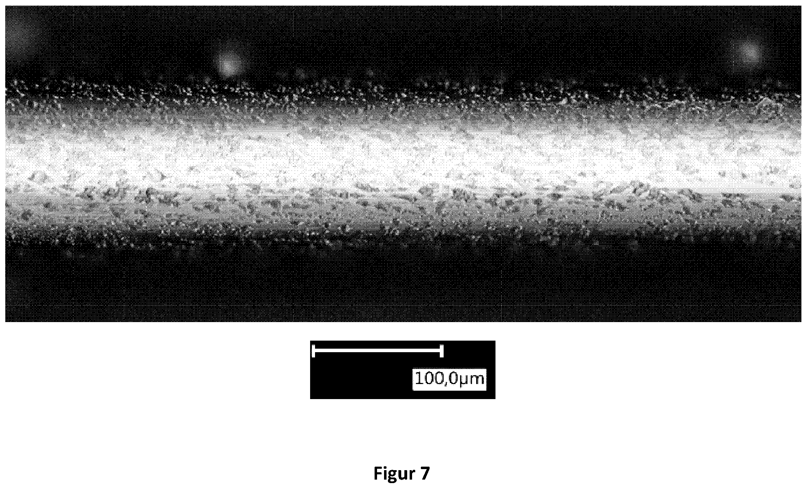

**Figur 7** zeigt die lichtmikroskopische Aufnahme der Oberfläche bei 500-facher Vergrößerung einer nicht erfindungsgemäßen Drahtelektrode gemäß dem Vergleichsmuster V2.

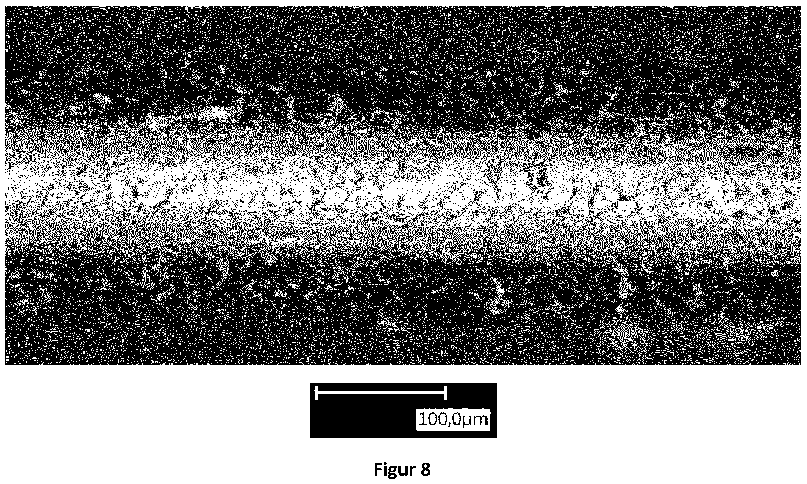

**Figur 8** zeigt die lichtmikroskopische Aufnahme der Oberfläche bei 500-facher Vergrößerung einer nicht erfindungsgemäßen Drahtelektrode gemäß dem Vergleichsmuster V3.

Die Vorteile der erfindungsgemäßen Drahtelektrode werden im Folgenden anhand von zwei Ausführungsbeispielen im Vergleich zu verschiedenen Drahtelektroden gemäß Stand der Technik erläutert. Die Herstellung der Drahtmuster erfolgte gemäß den im Folgenden dargestellten Abläufen:

### Vergleichsmuster V1:

- Ausgangsdraht: CuZn40, d=1,20 mm
- Ziehen an d=0,25 mm und Spannungsarmglühen

### Vergleichsmuster V2:

- Ausgangsdraht: CuZn37, d=1,20 mm
- Galvanische Verzinkung mit 1,5 µm
- Diffusionsglühung im Haubenofen unter Umgebungsatmosphäre bei 180°C, 9h
- Ziehen an d=0,25 mm und Spannungsarmglühen

### Vergleichsmuster V3:

- Ausgangsdraht: CuZn40, d=1,20 mm
- Galvanische Verzinkung mit 7 µm
- Diffusionsglühung im Haubenofen unter Umgebungsatmosphäre bei 180°C, 9h
- Ziehen an d=0,25 mm und Spannungsarmglühen

### Erfindungsgemäßes Muster E1:

- Ausgangsdraht: CuZn37, d=1,20 mm
- Galvanische Verzinkung mit 3 µm
- Diffusionsglühung im Haubenofen unter Umgebungsatmosphäre bei 180°C, 9h
- Ziehen an d=0,25 mm und Spannungsarmglühen

### Erfindungsgemäßes Muster E2:

- Ausgangsdraht: CuZn40, d=1,20 mm
- Galvanische Verzinkung mit 2 µm
- Diffusionsglühung im Haubenofen unter Umgebungsatmosphäre bei 180°C, 9h
- Ziehen an d=0,25 mm und Spannungsarmglühen

In Tabelle 1 sind die mit jeder Drahtelektrode erzielten relativen Schneidleistungen bei einer funkenerosiven Bearbeitung im Hauptschnitt sowie bei einer Bearbeitung mit Hauptschnitt und 3 Nachschnitten angegeben. Die funkenerosive Bearbeitung erfolgte auf einer handelsüblichen Drahterodieranlage mit deionisiertem Wasser als Dielektrikum. Bearbeitet wurde ein 60 mm hohes Werkstück aus gehärtetem Kaltarbeitsstahl der Sorte X155CrVMo12-1. Als Schnittkontur wurde ein Quadrat mit einer Kantenlänge von 10 mm gewählt. Als Bearbeitungstechnologie wurde eine maschinenseitig vorhandene Technologie für blanke Messingdrähte der Zusammensetzung CuZn40 gewählt.

**Tabelle 1**

| **Drahtmuster** | **Durchmesser (mm)** | **Relative Schneidleistung im Hauptschnitt (%)** | **Relative Schneidleistung über Hauptschnitt und 3 Nachschnitte (%)** |
|---|---|---|---|
| Vergleichsmuster V1 | 0,25 | 100 | 100 |
| Vergleichsmuster V2 | 0,25 | 101 | 104 |
| Vergleichsmuster V3 | 0,25 | 105 | 103 |
| Erfindungsgemäßes Muster E1 | 0,25 | 105 | 111 |
| Erfindungsgemäßes Muster E2 | 0,25 | 105 | 112 |

Die mit Vergleichsmuster V1 im Hauptschnitt bzw. im Hauptschnitt und 3 Nachschnitten erzielte Schneidleistung wurde jeweils zu 100% gesetzt.

Vergleichsmuster V2 weist eine Mantelschicht auf, die aus blockartigen Partikeln besteht. Diese Partikel weisen einen Zinkgehalt von 60 - 63 Gew.-% auf und bestehen überwiegend aus γ-Messing. Der Bedeckungsgrad beträgt ca. 35%. In einer Ansicht senkrecht auf die Drahtoberfläche ergeben diejenigen blockartigen Partikel, deren Fläche jeweils im Bereich von 25 - 250 µm² liegt, in Summe einen Anteil von ca. 45% der Fläche aller blockartigen Partikel (siehe Figur 7). Bei diesem Vergleichsmuster liegt die Dicke bei mehr als zwei Drittel der blockartigen Partikel gemessen in radialer Richtung an einem Drahtquerschnitt beim Enddurchmesser unterhalb von 0,8% des Enddurchmessers. Gegenüber Vergleichsmuster V1 wird die Schneidleistung um 1 % bzw. 4% gesteigert.

Vergleichsmuster V3 weist ebenfalls eine Mantelschicht auf, die aus blockartigen Partikeln besteht. Diese Partikel weisen einen Zinkgehalt von 60 - 63 Gew.-% auf und bestehen überwiegend aus γ-Messing. Der Bedeckungsgrad beträgt ca. 60%. In einer Ansicht senkrecht auf die Drahtoberfläche ergeben diejenigen blockartigen Partikel, deren Fläche jeweils im Bereich von 25 - 250 µm² liegt, in Summe einen Anteil von weniger als 45% der Fläche aller blockartigen Partikel (siehe Figur 8). Es liegen vermehrt blockartige Partikel mit einer Fläche von mehr als 250 µm² und mit einer Dicke gemessen in radialer Richtung an einem Drahtquerschnitt von mehr als 2% des Enddurchmessers vor. Zudem variiert die Dicke der blockartigen Partikel stärker. Mit diesem Vergleichsmuster wird die Schneidleistung gegenüber Vergleichsmuster V1 um 5% bzw. 3% gesteigert.

Das erfindungsgemäße Muster E1 weist eine Mantelschicht auf, die aus blockartigen Partikeln besteht. Die blockartigen Partikel sind durch Risse und Vertiefungen (Spalten) wenigstens über einen Teil ihres Umfangs voneinander bzw. von dem Material des Drahtkerns räumlich separiert. Die blockartigen Partikel weisen einen Zinkgehalt von 60 - 63 Gew.-% auf und bestehen überwiegend aus γ-Messing. Der Bedeckungsgrad beträgt ca. 40%. In einer Ansicht senkrecht auf die Drahtoberfläche ergeben diejenigen blockartigen Partikel, deren Fläche jeweils im Bereich von 25 - 250 µm² liegt, in Summe einen Anteil von ca. 90% der Fläche aller blockartigen Partikel. In einer Ansicht senkrecht auf die Drahtoberfläche sind die blockartigen Partikel überwiegend in zeilenförmigen Clustern von vier oder mehr Partikeln angeordnet. In diesen Clustern beträgt der Abstand zwischen den Partikeln weniger als 15 µm. Mehr als 50% der zeilenförmigen Cluster bilden mit der Längsachse der Drahtelektrode einen Winkel von weniger als 40°. Bei 80% der blockartigen Partikel liegt die Dicke gemessen in radialer Richtung an einem Drahtquerschnitt im Bereich von 3-4,5 µm, d.h. bei 1,2-1,8% des Drahtdurchmessers. Mit dem erfindungsgemäßen Muster E1 wird die Schneidleistung gegenüber Vergleichsmuster 1 um 5% bzw. 11% erhöht.

Das erfindungsgemäße Muster E2 weist eine Mantelschicht auf, die aus blockartigen Partikeln besteht. Die blockartigen Partikel sind durch Risse und Vertiefungen (Spalten) wenigstens über einen Teil ihres Umfangs voneinander bzw. von dem Material des Drahtkerns räumlich separiert. Die blockartigen Partikel weisen einen Zinkgehalt von 60 - 64 Gew.-% auf und bestehen überwiegend aus γ-Messing. Der Bedeckungsgrad beträgt ca. 45%. In einer Ansicht senkrecht auf die Drahtoberfläche ergeben diejenigen blockartigen Partikel, deren Fläche jeweils im Bereich von 25 - 250 µm² liegt, in Summe einen Anteil von ca. 85% der Fläche aller blockartigen Partikel. In einer Ansicht senkrecht auf die Drahtoberfläche sind die blockartigen Partikel überwiegend in zeilenförmigen Clustern von vier oder mehr Partikeln angeordnet. In diesen Clustern beträgt der Abstand zwischen den Partikeln weniger als 15 µm. Mehr als 50% der zeilenförmigen Cluster bilden mit der Längsachse der Drahtelektrode einen Winkel von weniger als 40°. Bei 80% der blockartigen Partikel liegt die Dicke gemessen in radialer Richtung an einem Drahtquerschnitt im Bereich von 3,5-4,5 µm, d.h. bei 1,2-1,8% des Drahtdurchmessers. Mit dem erfindungsgemäßen Muster E1 wird die Schneidleistung gegenüber Vergleichsmuster 1 um 5% bzw. 12% erhöht.

Zur Beurteilung der Eignung zum Feinschlichten wurde mit den Vergleichsmustern V1 und V3 sowie den erfindungsgemäßen Mustern E1 und E2 eine funkenerosive Bearbeitung mit Hauptschnitt und 7 Nachschnitten durchgeführt. Die funkenerosive Bearbeitung erfolgte auf einer handelsüblichen Drahterodieranlage mit deionisiertem Wasser als Dielektrikum. Bearbeitet wurde ein 50 mm hohes Werkstück aus gehärtetem Kaltarbeitsstahl der Sorte X155CrVMo12-1. Als Schnittkontur wurde ein Quadrat mit einer Kantenlänge von 10 mm gewählt. Als Bearbeitungstechnologie wurde eine maschinenseitig vorhandene Technologie für verzinkte Messingdrähte gewählt. Der Zielwert für den arithmetischen Mittenrauhwert Rₐ beträgt 0,13 µm. Die Messung der Rauheit am erodierten stempelförmigen Bauteil erfolgte mittels eines Tastschnittgeräts. Die Messrichtung verlief senkrecht zur Drahtablaufrichtung. Die Beurteilung der Riefenbildung erfolgte rein qualitativ mit bloßem Auge. Die Messung der Konturabweichung erfolgte mittels einer Bügelmessschraube in 2 Achsen und 3 unterschiedlichen Höhen am Bauteil (Oben, Mitte, Unten). Die Ergebnisse sind in Tabelle 2 dargestellt.

Mit Vergleichsmuster V1 wird ein Rₐ-Wert von 0,19 µm erreicht. Die visuelle Beurteilung des Bauteils ergibt eine starke Ausbildung von Riefen. Dieses Resultat lässt sich allgemein durch das Fehlen einer zinkhaltigen Beschichtung begründen. Mit Vergleichsmuster V3 wird ein Rₐ-Wert von 0,23 µm erreicht. Die visuelle Beurteilung des Bauteils ergibt ebenfalls eine starke Ausbildung von Riefen. Die Konturabweichung beträgt 5 µm. Dieses Resultat lässt sich durch das Vorhandensein von blockartigen Partikeln begründen, die im Vergleich zu den Mustern E1 und E2 eine größere Dicke aufweisen sowie durch die stärker variierende Dicke der blockartigen Partikel.

Mit den erfindungsgemäßen Mustern E1 und E2 wird mit einem Rₐ-Wert von 0,13 µm eine Oberflächenrauheit erreicht, die nur marginal vom Zielwert abweicht. Die Ausbildung von Riefen ist gering. Die Konturabweichung beträgt in beiden Fällen 3 µm und liegt damit auf dem Niveau von Vergleichsmuster V1.

**Tabelle 2**

| **Drahtmuster** | **Durch messer (mm)** | **Oberflächenrauheit am Werkstück in Rₐ (µm)** | **Riefenbildung (Visuelle Beurteilung)** | **Konturabweichung (µm)** |
|---|---|---|---|---|
| | | | **1** = **gering** | |
| | | | **2 = mäßig** | |
| | | | **3 = stark** | |
| Vergleichsmuster V1 | 0,25 | 0,19 | 3 | 3 |
| Vergleichsmuster V3 | 0,25 | 0,23 | 3 | 5 |
| Erfindungsgemäßes Muster E1 | 0,25 | 0,13 | 1 | 3 |
| Erfindungsgemäßes Muster E2 | 0,25 | 0,13 | 1 | 2 |

### Bezugszeichen

| | |
|---|---|
| 1: | Drahtelektrode |
| 2: | Drahtkern |
| 3: | blockartige Partikel |
| 4: | Risse, die blockartigen Partikel umgebend |
| 4': | Risse innerhalb der blockartigen Partikel |
| 5: | Mittelachse (Längsachse) der Drahtelektrode |
| 6: | Bezugsrahmen |
| 7: | Zeilenfömige Cluster von blockartigen Partikeln |

### Zitierte Dokumente

US 5,945,010
US 6,306,523
US 7,723,635
EP-A-2 193 867
EP-A-1 846 189
EP-A-2 517 817
EP-A-1 295 664
EP-A-1 949 995

## Patentansprüche

1. Drahtelektrode zum funkenerosiven Schneiden mit
- einem Kern (2), der ein Metall oder eine Metalllegierung aufweist, und
- einem den Kern (2) umgebende Mantelschicht (3), die Bereiche umfasst, deren Morphologie blockartigen Partikeln entspricht, die durch Risse wenigstens über einen Teil ihres Umfangs voneinander und/oder dem Kernmaterial räumlich separiert sind, wobei in einem Drahtquerschnitt senkrecht oder parallel zur Drahtlängsachse betrachtet der mehr als 50% betragende Teil der Fläche eines Bereichs mit der Morphologie eines blockartigen Partikels eine Kupfer-Zink-Legierung mit einer Zinkkonzentration von 58,5 - 67 Gew.-% aufweist, **dadurch gekennzeichnet, dass** in einer Ansicht senkrecht auf die Drahtoberfläche der Anteil der durch die blockartigen Partikel gebildeten Oberfläche mehr als 20% und weniger als 50% der gesamten Oberfläche der Drahtelektrode beträgt und diejenigen blockartigen Partikel, deren Fläche jeweils im Bereich von 25 - 250 µm² liegt, in Summe einen Anteil von mehr als 50% der Fläche aller blockartigen Partikel ausmachen.

2. Drahtelektrode nach Anspruch 1, bei der der mehr als 75% betragende Teil der Fläche der blockartigen Partikel eine Kupfer-Zink-Legierung mit einer Zinkkonzentration von 58,5 - 67 Gew.-% aufweist.

3. Drahtelektrode nach einem der vorhergehenden Ansprüche, bei der der Anteil der durch die blockartigen Partikel gebildeten Oberfläche mehr als 30% und weniger als 45% der gesamten Oberfläche der Drahtelektrode beträgt.

4. Drahtelektrode nach einem der vorhergehenden Ansprüche, bei der in einer Ansicht senkrecht auf die Drahtoberfläche diejenigen blockartigen Partikel, deren Fläche im Bereich von 25 - 200 µm² liegt, in Summe einen Anteil von mehr als 50% der Fläche aller blockartigen Partikel ausmachen.

5. Drahtelektrode nach einem der vorhergehenden Ansprüche, bei der die blockartigen Partikel in zeilenförmigen Clustern von vier oder mehr Partikeln vorliegen, innerhalb derer der Abstand zwischen zwei Partikeln weniger als 15 µm beträgt.

6. Drahtelektrode nach Anspruch 5, bei der der Abstand zwischen zwei Partikeln innerhalb der zeilenförmigen Cluster weniger als 10 µm beträgt.

7. Drahtelektrode nach einem der vorhergehenden Ansprüche 5 und 6, bei der die Mehrheit der zeilenförmigen Cluster mit der Längsachse der Drahtelektrode einen Winkel von weniger als 45° einschließt.

8. Drahtelektrode nach einem der vorhergehenden Ansprüche 5 bis 7, bei der die Mehrheit der zeilenförmigen Cluster mit der Längsachse der Drahtelektrode einen Winkel von weniger als 40° einschließt.

9. Drahtelektrode nach einem der vorhergehenden Ansprüche, bei der in einem Drahtquerschnitt senkrecht oder parallel zur Drahtlängsachse betrachtet mehr als zwei Drittel der blockartigen Partikel eine Dicke gemessen in radialer Richtung von mehr als 0,8% und weniger als 2% des Gesamtdurchmessers der Drahtelektrode aufweisen.

10. Drahtelektrode nach Anspruch 9, bei der mehr als 75% der blockartigen Partikel eine Dicke gemessen in radialer Richtung von mehr als 0,8% und weniger als 2% des Gesamtdurchmessers der Drahtelektrode aufweisen.

11. Drahtelektrode nach einem der vorhergehenden Ansprüche, bei der das Metall Kupfer und die Metalllegierung eine Kupfer-Zink-Legierung ist.

12. Drahtelektrode nach einem der vorhergehenden Ansprüche, bei der der Kern (2) aus Kupfer oder einer Kupfer-Zink-Legierung mit einem Zinkgehalt von 20 bis 40 Gew.-% ausgebildet ist.

13. Drahtelektrode nach einem der vorhergehenden Ansprüche, bei der der Kern (2) aus einer der Legierungen CuZn₃₇ oder CuZn₄₀ ausgebildet ist.

14. Drahtelektrode nach einem der vorhergehenden Ansprüche, bei der die Bereiche mit der Morphologie blockartiger Partikel innere Risse (4`) aufweisen.

## Claims

1. Wire electrode for spark-erosion cutting having
- a core (2), which contains a metal or a metal alloy, and
- a covering layer (3), surrounding the core (2), which comprises regions the morphology of which corresponds to block-like particles, which are spatially separated, at least over a portion of their circumference, from each other and/or the core material by cracks, wherein, viewed in a wire cross section perpendicular or parallel to the wire longitudinal axis, the portion amounting to more than 50% of the surface area of a region with the morphology of a block-like particle contains a copper-zinc alloy with a zinc concentration of 58.5 - 67 wt.-%, **characterized in that**, in a view perpendicular to the wire surface, the proportion of the surface formed by the block-like particles is more than 20% and less than 50% of the entire surface of the wire electrode and the block-like particles the surface area of which in each case lies in the range of 25 - 250 µm² in total make up a proportion of more than 50% of the surface area of all block-like particles.

2. Wire electrode according to claim 1, in which the portion amounting to more than 75% of the surface area of the block-like particles contains a copper-zinc alloy with a zinc concentration of 58.5 - 67 wt.-%.

3. Wire electrode according to one of the preceding claims, in which the proportion of the surface formed by the block-like particles is more than 30% and less than 45% of the entire surface of the wire electrode.

4. Wire electrode according to one of the preceding claims, in which, in a view perpendicular to the wire surface, the block-like particles the surface area of which lies in the range of 25 - 200 µm² in total make up a proportion of more than 50% of the surface area of all block-like particles.

5. Wire electrode according to one of the preceding claims, in which the block-like particles are present in line-shaped clusters of four or more particles, within which the spacing between two particles is less than 15 µm.

6. Wire electrode according to claim 5, in which the spacing between two particles within the line-shaped clusters is less than 10 µm.

7. Wire electrode according to one of the preceding claims 5 and 6, in which the majority of the line-shaped clusters form an angle with the longitudinal axis of the wire electrode of less than 45°.

8. Wire electrode according to one of the preceding claims 5 to 7, in which the majority of the line-shaped clusters form an angle with the longitudinal axis of the wire electrode of less than 40°.

9. Wire electrode according to one of the preceding claims, in which, viewed in a wire cross section perpendicular or parallel to the wire longitudinal axis, more than two thirds of the block-like particles have a thickness, measured in the radial direction, of more than 0.8% and less than 2% of the total diameter of the wire electrode.

10. Wire electrode according to claim 9, in which more than 75% of the block-like particles have a thickness, measured in the radial direction, of more than 0.8% and less than 2% of the total diameter of the wire electrode.

11. Wire electrode according to one of the preceding claims, in which the metal is copper and the metal alloy is a copper-zinc alloy.

12. Wire electrode according to one of the preceding claims, in which the core (2) is formed of copper or a copper-zinc alloy with a zinc content of from 20 to 40 wt.-%.

13. Wire electrode according to one of the preceding claims, in which the core (2) is formed of one of the alloys CuZn₃₇ or CuZn₄₀.

14. Wire electrode according to one of the preceding claims, in which the regions with the morphology of block-like particles have inner cracks (4').

## Revendications

1. Fil électrode destiné à la découpe par étincelage érosif, comprenant
- un noyau (2) qui présente un métal ou un alliage métallique, et
- une couche d'enveloppe (3) qui entoure le noyau (2) et comporte des zones dont la morphologie correspond à des particules en forme de blocs qui sont séparées dans l'espace les unes des autres et/ou du matériau de noyau, par des fissures au moins sur une partie de leur pourtour, sachant que dans une coupe du fil, vue perpendiculairement ou parallèlement à l'axe longitudinal du fil, la partie de la surface d'une zone, ayant la morphologie d'une particule en forme de bloc, qui est supérieure à 50 % présente un alliage cuivre-zinc avec une concentration en zinc allant de 58,5 à 67 % en poids, **caractérisé en ce que** dans une vue perpendiculaire à la surface du fil, la part de la surface formée par les particules en forme de blocs est supérieure à 20 % et inférieure à 50 % de la surface totale du fil électrode, et celles des particules en forme de blocs dont la surface est respectivement comprise dans la plage allant de 25 à 250 µm² représentent au total une part de plus de 50 % de la surface de l'ensemble des particules en forme de blocs.

2. Fil électrode selon la revendication 1, dans lequel la part de la surface des particules en forme de blocs qui est supérieure à 75 % présente un alliage cuivre-zinc avec une concentration en zinc allant de 58,5 à 67 % en poids.

3. Fil électrode selon une des revendications précédentes, dans lequel la part de la surface formée par les particules en forme de blocs est supérieure à 30 % et inférieure à 45 % de la surface totale du fil électrode.

4. Fil électrode selon une des revendications précédentes, dans lequel, dans une vue perpendiculaire à la surface du fil, celles des particules en forme de blocs dont la surface est comprise dans la plage allant de 25 à 200 µm² représentent au total une part de plus de 50 % de la surface de l'ensemble des particules en forme de blocs.

5. Fil électrode selon une des revendications précédentes, dans lequel les particules en forme de blocs se présentent par grappes en forme de lignes qui comportent quatre ou plus de quatre particules et à l'intérieur desquelles la distance entre deux particules est inférieure à 15 µm.

6. Fil électrode selon la revendication 5, dans lequel la distance entre deux particules à l'intérieur des grappes en forme de lignes est inférieure à 10 µm.

7. Fil électrode selon une des revendications 5 et 6, dans lequel la majorité des grappes en forme de lignes forme avec l'axe longitudinal du fil électrode un angle inférieur à 45°.

8. Fil électrode selon une des revendications 5 à 7, dans lequel la majorité des grappes en forme de lignes forme avec l'axe longitudinal du fil électrode un angle inférieur à 40°.

9. Fil électrode selon une des revendications précédentes, dans lequel, dans une coupe du fil, vue perpendiculairement ou parallèlement à l'axe longitudinal du fil, plus des deux tiers des particules en forme de blocs présentent une épaisseur, mesurée dans la direction radiale, qui est supérieure à 0,8 % et inférieure à 2 % du diamètre total du fil électrode.

10. Fil électrode selon la revendication 9, dans lequel plus de 75 % des particules en forme de blocs présentent une épaisseur, mesurée dans la direction radiale, qui est supérieure à 0,8 % et inférieure à 2 % du diamètre total du fil électrode.

11. Fil électrode selon une des revendications précédentes, dans lequel le métal est du cuivre et l'alliage métallique est un alliage cuivre-zinc.

12. Fil électrode selon une des revendications précédentes, dans lequel le noyau est réalisé à partir de cuivre ou d'un alliage cuivre-zinc, avec une teneur en zinc allant de 20 à 40 % en poids.

13. Fil électrode selon une des revendications précédentes, dans lequel le noyau est réalisé à partir d'un des alliages CuZn₃₇ ou CuZn₄₀.

14. Fil électrode selon une des revendications précédentes, dans lequel les zones ayant la morphologie de particules en forme de blocs présentent des fissures internes (4').
